# EUROPÄISCHE PATENTSCHRIFT

(11) **EP 0 693 793 B1**
(45) Veröffentlichungstag und Bekanntmachung des Hinweises auf die Patenterteilung: **09.10.2002**
(21) Anmeldenummer: 95109757.5
(22) Anmeldetag: 23.06.1995
(51) Int. Cl.: H01M 8/08, H01M 8/06, H01M 8/04

(54) **Verfahren und Vorrichtung zum dosierten Zuführen von Methanol und/oder Wasser zu einem Brennstoffzellensystem**
Method and device for supplying doses of methanol and/or water to a fuel cell system
Méthode et dispositif d'amenée de doses de méthanol et/ou d'eau à un système de piles à combustible

(30) Priorität: 20.07.1994 DE 4425634
(43) Veröffentlichungstag der Anmeldung: 24.01.1996
(73) Patentinhaber: Ballard Power Systems AG, 73230 Kirchheim / Teck-Nabern (DE)
(72) Erfinder: Fleck, Wolfram, Dipl.-Ing., D-89155 Erbach (DE); Wiesheu, Norbert, Dipl.-Ing., D-89312 Günzburg (DE); Benz, Uwe, Dipl.-Ing., D-88690 Uhldingen (DE)

(56) Entgegenhaltungen:
- EP-A- 0 205 146
- EP-A- 0 206 608
- GB-A- 1 096 046
- GB-A- 2 250 130
- PATENT ABSTRACTS OF JAPAN vol. 012, no. 249 (P-730), 14. Juli 1988 (1988-07-14) -& JP 63 040901 A (MITSUBISHI ELECTRIC CORP), 22. Februar 1988 (1988-02-22)
- PATENT ABSTRACTS OF JAPAN vol. 008, no. 084 (E-239), 18. April 1984 (1984-04-18) -& JP 59 005571 A (SHINKOUBE DENKI KK), 12. Januar 1984 (1984-01-12)
- PATENT ABSTRACTS OF JAPAN vol. 008, no. 084 (E-239), 18. April 1984 (1984-04-18) -& JP 59 005572 A (SHINKOUBE DENKI KK), 12. Januar 1984 (1984-01-12)
- PATENT ABSTRACTS OF JAPAN vol. 008, no. 084 (E-239), 18. April 1984 (1984-04-18) -& JP 59 005573 A (SHINKOUBE DENKI KK), 12. Januar 1984 (1984-01-12)

## Beschreibung

Die Erfindung betrifft ein Verfahren und eine Vorrichtung zum dosierten Zuführen von Methanol und/oder Wasser zu einem Brennstoffzellensystem gemäß dem Oberbegriff des Patentanspruchs 1 beziehungsweise 8.

Zum Betrieb von Brennstoffzellen mit protonenleitenden Elektrolytmembranen, im folgenden als PEM-Brennstoffzellen bezeichnet, für mobile Anwendungen soll Wasserstoff aus Methanol durch Wasserdampfreformierung und/oder partielle Oxidation erzeugt werden. Bei beiden Prozessen ist die Förderung und Dosierung der flüssigen Reaktanden notwendig. Zum einen muß Methanol und/oder Wasser in den Verdampfer zudosiert werden. Zum anderen muß zur Bereitstellung von Prozeßwärme das Methanol zur anschließenden Verbrennung zudosiert werden. Außerdem muß die bereitgestellte Prozeßluft immer in ausreichenden Maße befeuchtet werden. Insbesondere in dynamischen Betriebszuständen muß das Wasser der geforderten Luftmenge so zudosiert werden, daß sich immer eine gewünschte relative Feuchte einstellt.

Aus der US-PS 52 48 566 ist beispielsweise eine Brennstoffzelle mit Reformer für ein Kraftfahrzeug bekannt, bei der dem Reformer Wasser, Luft und ein Kraftstoff, beispielsweise Methanol über eine Förderleitung zugeführt wird. Die Förderung und Dosierung des Wassers und des Methanols erfolgt üblicherweise über Dosierpumpen. In einem komplexen Brennstoffzellensystem kann es jedoch vorkommen, daß eine Vielzahl solcher Dosierpumpen benötigt würden.

Bei PEM-Brennstoffzellen ist es außerdem notwendig, daß auch die Prozeßluft immer in ausreichendem Maße befeuchtet wird. Die Befeuchtung der Prozeßluft wird beispielsweise über feuchte Membranwände bewerkstelligt. Dieses Verfahren erlaubt jedoch den dynamischen Betrieb des Brennstoffzellensystems nicht in ausreichendem Umfang.

Aus der DE 35 08 153 A1 ist außerdem ein Brennstoffzellensystem bekannt, bei dem ein Methanol/Wassergemisch aus einem Tank zugeführt wird. Zur Einstellung einer vorgegebenen Methanolkonzentration wird zusätzlich Methanol über einen Durchflußmengenregler dosiert zugegeben.

Aus der JP 59 005571 A ist schließlich eine gattungsgemäße Vorrichtung zum Zuführen von Kraftstoff zu einem Brennstoffzellensystem bekannt, bei dem der Kraftstoff mit Hilfe einer Pumpe aus einem Kraftstofftank gefördert wird. In der Förderleitung ist außerdem ein Dosierventil vorgesehen. Parallel zur Pumpe ist eine Rückführleitung mit einem darin angeordneten Druckhalteventil vorgesehen, die zwischen Pumpe und Dosierventil von der Förderleitung abzweigt und zwischen Kraftstofftank und Pumpe wieder in die Förderleitung einmündet. Durch die Rückführleitung mit Druckhalteventil wird am Dosierventil ständig Kraftstoff mit konstantem Druck vorgehalten.

Die Aufgabe der Erfindung besteht darin, ein Verfahren und eine Vorrichtung zum dosierten Zuführen von flüssigen Reaktanden zu einem Brennstoffzellensystem zu schaffen, das eine sehr gute Dynamik bei Lastwechseln, exakte Dosierung bei variablem Systemdruck und einen kompakten Aufbau gewährleistet.

Die Aufgabe wird erfindungsgemäß durch die kennzeichnenden Merkmale des Patentanspruchs 1 beziehungsweise 8 gelöst.

Das erfindungsgemäße System weist den Vorteil auf, daß für die Zufuhr aller Reaktanden ein einheitliches Dosiersystem verwendet werden kann. Hierbei wird der Reaktand aus einem Vorratsbehälter mit Hilfe einer Förderpumpe in ausreichendem Maße einem geschlossenen Kreis, bestehend aus Förder- und Rückführleitung, zugeführt. Die Zudosierung des Reaktanden zum Brennstoffzellensystem erfolgt dann über Dosierventile, wobei der Differenzdruck am Dosierventil über einen Differenzdruckregeler eingestellt wird. Die Dosierung kann in diesem Fall auf einfache Art und Weise durch Einstellung der Öffnungs- beziehungsweise Schließzeiten des Dosierventils erfolgen.

Ein weiterer Vorteil besteht darin, daß mehrere Komponenten des Brennstoffzellensystems über ein gemeinsames Dosiersystem beaufschlagt werden können, wobei die Komponenten mit absteigendem Systemdruck in Strömungsrichtung hintereinander angeordnet werden. Obwohl der Systemdruck in weiten Bereichen variiert, kann dennoch an den Dosierstellen der benötigte Differenzdruck jeweils über den zugehörigen Differenzdruckregler eingestellt werden. Im Betrieb kann dann jedes Dosierventil einzelnen durch ein Steuergerät individuell angesteuert werden. Schließlich ist es auch möglich, mehrere Dosiersysteme, beispielsweise eines für das Methanol und eines für die Zufuhr von Reinstwasser, mit einem gemeinsamen Pumpenmotor zu betreiben, was zu einer erheblichen Bauteileersparnis und somit zu einer Reduzierung des benötigten Bauraumes führt.

Weitere Vorteile und Ausgestaltungen gehen aus den Unteransprüchen und der Beschreibung hervor. Die Erfindung ist nachstehend anhand einer Zeichnung, die eine Anordnung für ein PEM-Brennstoffzellensystem mit zwei jeweils zweistufigen Dosiersystemen zeigt, näher beschrieben.

Die beiden Dosiersysteme 1, 2 dienen zur Zufuhr von Reinstwasser beziehungsweise von Methanol zu einzelnen Komponenten eines PEM-Brennstoffzellensystems. Im ersten Dosiersystem 1 wird das Reinstwasser aus einem Vorratsbehälter 3 mit Hilfe einer Förderpumpe 4 in eine Förderleitung 5 gefördert. Zwischen Vorratsbehälter 3 und Förderpumpe 4 kann zur Reinigung des Reinstwassers ein Filter 6 vorgesehen werden. Zwischen der Förderpumpe 4 und der ersten Komponente 6 des Brennstoffzellensystems ist ein Dosierventil 7 in der Förderleitung 5 angeordnet. Stromauf des Dosierventils 7 zweigt eine Rückführleitung 8, die das überschüssige Reinstwasser zur nächsten Anwendung oder in den Vorratsbehälter 3 zurückführt, von der Förderleitung 5 ab.

In der Rückführleitung 8 ist ein Differenzdruckregeler 9, der zusätzlich über eine Steuerleitung 10 stromauf des Dosierventils 7 mit der Förderleitung 5 verbunden ist, vorgesehen. Zum Abbau von Schwingungen, die durch Pumpen oder durch schwankende Systemdrücke in der Förderleitung 5 hervorgerufen werden können, kann stromab der Abzweigung der Steuerleitung 10 ein Pulsationsdämpfer 11 in die Förderleitung 5 angeordnet werden. Um außerdem zu verhindern, daß Reinstwasser im drucklosen Zustand in die erste Komponente 6 des Brennstoffzellensystems gelangt, kann zusätzlich noch ein Rückschlagventil 12 eingesetzt werden.

Als Förderpumpe 4 kann beispielsweise eine Zahnradpumpe mit entsprechend steif gewählter Förderkennlinie verwendet werden, die einen festen Massenstrom des Reinstwassers bei einem relativ konstanten Druckunterschied zwischen der Saugseite P1 und der Druckseite P2 liefert. Die Förderpumpe 4 wird so dimensioniert, daß eine genügend große Regelmenge an Reinstwasser für den Differenzdruckregler 9 zur Verfügung steht. Der Differenzdruckregler 9 regelt den Druckunterschied zwischen dem Druck p2 in der Förderleitung 5 und dem Systemdruck p3 in der ersten Komponente 6 des Brennstoffzellensystems auf einen konstanten Wert Δp1=p3-p2. Hierzu kann beispielsweise ein mechanischer Differenzdruckregler 9 verwendet werden. Dabei muß berücksichtigt werden, daß der Systemdruck p3 beispielsweise bei Lastwechseln stark schwanken kann. Der Differenzdruck Δp1 am Dosierventil 7 wird dadurch geregelt, daß die Reinstwassermenge, die über die Rückführleitung zum Vorratsbehälter 3 zurückgeführt wird, mit Hilfe des Differenzdruckreglers 9 in Abhängigkeit vom Systemdruck p3 in der Komponente 6 des Brennstoffzellensystems eingestellt wird. Hierzu wird der Differenzdruckregler 9 über die Steuerleitung 10 mit dem Systemdruck p3 beaufschlagt.

Da somit das Dosierventil 7 bei konstantem Druckgefälle betrieben wird, kann die Dosierung der Reinstwassermenge durch Ansteuerung der Öffnungs- und Schließzeiten des Dosierventils 7 erfolgen. Hierzu ist das Dosierventil 7, das vorzugsweise als getaktetes Magnetdosierventil ausgeführt ist, mit einem Steuergerät 13 verbunden, das die Reinstwassermenge in Abhängigkeit von Betriebsparametern des Brennstoffzellensystems vorgibt. Damit kann ein Dosiersystem, das trotz variablem Systemdruck eine exakte Dosierung und ein sehr gutes dynamisches Verhalten gewährleistet, bereitgestellt werden.

Bei der Auslegung des Dosiersystems 1 werden die Eigenfrequenzen des Differenzdruckreglers 9, des Schwingungsdämpfers 11 und des Dosierventils 7 und die Taktfrequenz des Dosierventils 7 aufeinander abgestimmt. Für Brennstoffzellenkomponenten, in die das Reinstwasser in zerstäubter Form eingebracht werden muß, kann außerdem vorgesehen werden, daß das Ventil und die Zerstäubungsvorrichtung, beispielsweise in Form von bekannten Einspritzdüsen, in einem Bauteil integriert wird.

Ist es in einem Brennstoffzellensystem notwendig, Reinstwasser zu verschiedenen Komponenten bei unterschiedlichem Druckniveau zuzuführen, so kann das Dosiersystem 1 zweistufig ausgeführt werden. Hierzu zweigt stromab des Differenzdruckreglers 9 eine zweite Förderleitung 14, in der ein zweites, ebenfalls mit dem Steuergerät 13 verbundenes Dosierventil 15 vorgesehen ist, von der Rückführleitung 8 ab. Zusätzlich kann zwischen dem zweiten Dosierventil 7 und der zweiten Komponente 16 des Brennstoffzellensystems wiederum ein Pulsationsdämpfer 11 angeordnet werden. Zur Regelung des Differenzdruckes Δp2=p3'-p2' zwischen dem Druck p2' in der Rückführleitung 8 und dem Systemdruck p3' in der zweiten Komponente 16 des Brennstoffzellensystems ist zusätzlich stromab der Abzweigung der zweiten Förderleitung 14 ein zweiter Differenzdruckregler 17, der wiederum über eine Steuerleitung 18 mit der Förderleitung 14 stromab des Dosierventils 15 verbunden ist, angeordnet.

Da somit der Rücklauf der ersten Stufe gleichzeitig als Speisung für die zweite Stufe dient, kann die zweite Stufe nur auf einem niedrigeren Druckniveau p2'<p2 betrieben werden. Bei der beschriebenen Anordnung stellt dies jedoch keine Einschränkung dar, da bei PEM-Brennstoffzellen die Dosierung der Wassermenge für die Wasserdampfreformierung von Methanol sowieso auf einem höheren Niveau stattfindet, als die Dosierung des Reinstwassers für die Befeuchtung der Prozeßluft. Somit entspricht beim beschriebenen Ausführungsbeispiel die erste Komponente 6 dem Methanol-Reformer beziehungsweise dem zugehörigen Verdampfer und die zweite Komponente 16 der Befeuchtereinheit für die Prozeßluft.

Als zweiter Reaktand wird dem Brennstoffzellensystem beispielsweise Methanol zugeführt. Für die Dosierung des flüssigen Methanols sind hierbei wiederum zwei Anwendungsgebiete vorhanden. Zum einen wird das Methanol dem Reformer beziehungsweise dem zugehörigen Verdampfer zugeführt. Zum anderen kann das Methanol zur Bereitstellung von Prozeßwärme einem katalytischen Brenner zugeführt werden. Da für diese Anwendungen dieselben Anforderungen wie für das Reinstwassersystem, nämlich exakte Dosierung und gute Dynamik bei variablem Systemdruck, gelten, kann auch hierbei die bereits oben beschriebene Technik eingesetzt werden. Von Vorteil ist hierbei auch die Tatsache, daß die Dosierung von Methanol für den Reformationsprozeß signifikant höher liegt, als die Dosierung der Methanolmenge für den katalytischen Brenner. Somit kann die Dosiereinheit für den katalytischen Brenner wiederum in Reihe zur Dosiereinheit für den Reformer beziehungsweise dem zugehörigen Verdampfer angeordnet werden.

Zur Unterscheidung der beiden Dosiersysteme 1, 2 sind die Bezugszeichen des zweiten Dosiersystems 2 mit dem Index a versehen. Prinzipiell handelt es sich jedoch um identische Anordnungen. Die Unterschiede liegen nur darin, daß im zweiten Dosiersystem 2 der Vorratsbehälter 3a flüssiges Methanol enthält und daß als zweite Komponente des Brennstoffzellensystems der katalytische Brenner 16a mit Methanol versorgt wird. Durch diese Vereinheitlichung der Technik für die beiden Dosiersysteme 1, 2 kann die Komponentenzahl verringert und somit die Kosten reduziert werden. Die Ansteuerung der Dosierventile 7, 7a, 15, 15a erfolgt vorzugsweise durch ein gemeinsames Steuergerät 13. Es ist jedoch auch möglich, die einzelnen Dosierventile 7, 7a, 15, 15a über separate Steuergeräte anzusteuern.

Da bei mobilen Anwendungen der Bauraum sehr begrenzt ist kann es auch vorteilhaft sein, wenn für den Antrieb der beiden Förderpumpen 4, 4a ein gemeinsamer Pumpenmotor 19, der zwei freie Wellenenden aufweist, eingesetzt wird. Dabei trägt das eine Motorlager des Pumpenmotors 19 den Pumpenkopf 4 für das erste Dosiersystem 1 und das zweite Motorlager den Pumpenkopf 4a für das zweite Dosiersystem 2. Die Pumpenköpfe 4, 4a werden dabei so dimensioniert, daß eine genügend große Regelmenge an Reinstwasser beziehungsweise Methanol für die Differenzdruckregler 9, 17 beziehungsweise 9a, 17a bereitgestellt wird.

Die Ansteuerung jedes Dosierventils 7, 15, 7a, 15a kann mit Hilfe des Steuergerätes 13 individuell vorgenommen werden. So kann beispielsweise die Reinstwassermenge für die Wasserdampfreformierung in Abhängigkeit von der Methanolmenge und anderen Einflußgrößen dosiert werden. Die Methanolmenge kann wiederum in Abhängigkeit von der benötigten Wasserstoffmenge zudosiert werden. Schließlich kann die Reinstwassermenge für die Befeuchtereinheit 16 beziehungsweise die Methanolmenge für den katalytischen Brenner 16a beispielsweise in Abhängigkeit vom Luftmassenstrom eingestellt werden.

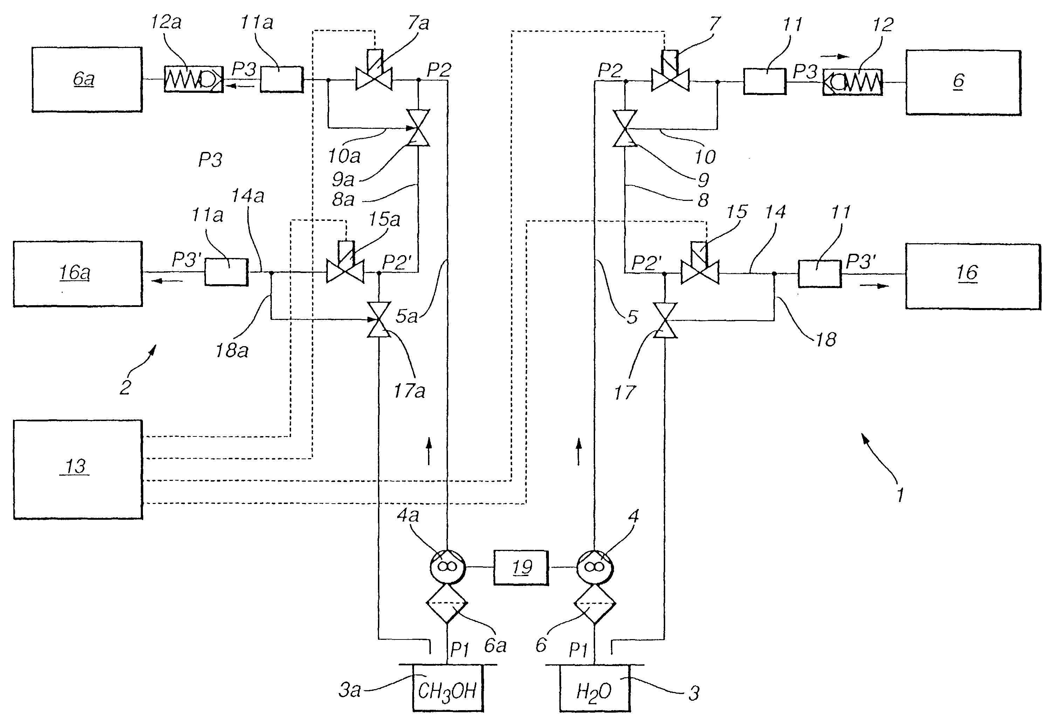

## Patentansprüche

1. Vorrichtung zum dosierten Zuführen von flüssigen Reaktanden aus einem Vorratsbehälter (3, 3a) mittels einer Förderpumpe (4, 4a) über eine Förderleitung (5, 5a) zu einem Brennstoffzellensystem (6, 6a), wobei zwischen Förderpumpe (4, 4a) und Brennstoffzellensystem (6, 6a) ein Dosierventil (7, 7a) in der Förderleitung (5, 5a) angeordnet ist, wobei stromauf des Dosierventils (7, 7a) eine Rückführleitung (8, 8a) von der Förderleitung (5, 5a) abzweigt, und wobei in der Rückführleitung (8, 8a) ein Druckregelventil (9, 9a) angeordnet ist,
**dadurch gekennzeichnet,**
**daß** das Druckregelventil als ein Differenzdruckregler (9, 9a) ausgebildet ist, welcher zur Einstellung der Druckdifferenz zwischen Förderleitung (5, 5a) und Brennstoffzellensystem (6, 6a) auf einem vorgegebenen Wert (Δp) zusätzlich über eine Steuerleitung (10, 10a) stromauf des Dosierventils (7, 7a) mit der Förderleitung (5, 5a) verbunden ist.

2. Vorrichtung nach Anspruch 1,
**dadurch gekennzeichnet,**
**daß** von der Rückführleitung (8, 8a) eine zweite Förderleitung (14, 14a) mit einem zweiten Dosierventil (15, 15a), über das der flüssige Reaktand zu einer zweiten Komponente (16, 16a) des Brennstoffzellensystems zugeführt wird, abzweigt, und daß stromab der Abzweigung der zweiten Förderleitung (14, 14a) ein zweiter Differenzdruckregler (17, 17a), der die Druckdifferenz zwischen der zweiten Förderleitung (14, 14a) und der zweiten Komponente (16, 16a) des Brennstoffzellensystems auf einem vorgegebenen (Δp) Wert einstellt, angeordnet ist.

3. Vorrichtung nach Anspruch 2,
**dadurch gekennzeichnet,**
**daß** die Zufuhr von Methanol über das erste Dosierventil (7a) zu einem Gaserzeugungssystem/Verdampfer (6a) und über das zweite Dosierventil (15a) zu einer Vorrichtung zur Erzeugung von Wärmeenergie durch Verbrennung des Methanols (16a) erfolgt.

4. Vorrichtung nach Anspruch 2,
**dadurch gekennzeichnet,**
**daß** die Zufuhr von Wasser über das erste Dosierventil (7) zu einem Gaserzeugungssystem/Verdampfer (6) und über das zweite Dosierventil (15) zu einer Vorrichtung zur Befeuchtung des Oxidantmassenstroms (16) erfolgt.

5. Vorrichtung nach Anspruch 1,
**dadurch gekennzeichnet,**
**daß** ein Dosiersystem (1) für den ersten Reaktanden und ein zweites Dosiersystem (2) für einen zweiten Reaktanden vorgesehen ist, wobei der Antrieb der Förderpumpen (4, 4a) für das erste und zweite Dosiersystem (1, 2) über einen gemeinsamen Pumpenmotor (19) erfolgt.

6. Vorrichtung nach Anspruch 1,
**dadurch gekennzeichnet,**
**daß** das Dosierventil (7, 7a, 15, 15a) als Magnetventil mit variablen Öffnungs- und Schließzeiten ausgebildet ist.

7. Vorrichtung nach Anspruch 6,
**dadurch gekennzeichnet,**
**daß** ein Steuergerät (13) zum Einstellen der Öffnungs- und Schließzeiten der Magnetventile (7, 7a, 15, 15a) vorgesehen ist.

8. Verfahren zum dosierten Zuführen von flüssigen Reaktanden aus einem Vorratsbehälter (3, 3a) zu einem Brennstoffzellensystem (6, 6a), wobei mit Hilfe einer Förderpumpe (4, 4a) ein vorgegebener Massenstrom aus dem Vorratsbehälter (3, 3a) gefördert wird, wobei die dem Brennstoffzellensystem (6, 6a, 16, 16a) zugeführte Flüssigkeitsmenge mit Hilfe eines Dosierventils (7, 7a, 15, 15a) auf einen vorgegebenen Wert eingestellt wird, und wobei mit Hilfe eines Differenzdruckreglers (9, 9a, 17, 17a) ein konstanter Differenzdruck (Δp1, Δp2) zwischen Förderleitung (5, 5a, 14, 14a) und Brennstoffzellensystem (6, 6a, 16, 16a) eingestellt wird.

9. Verfahren nach Anspruch 8,
**dadurch gekennzeichnet,**
**daß** als Dosierventil (7, 7a, 15, 15a) ein getaktetes Magnetventil verwendet wird, wobei die zuzuführende Flüssigkeitsmenge durch Einstellung der Öffnungs- und Schließzeiten des Magnetventils (7, 7a, 15, 15a) eingestellt wird.

## Claims

1. Device for delivering and metering liquid reagents from a supply container (3, 3a) by means of a delivery pump (4, 4a) via a delivery line (5, 5a) to a fuel cell system (6, 6a), a metering valve (7, 7a) being provided in the delivery line (5, 5a) between delivery pump (4, 4a) and fuel cell system (6, 6a), in which a return line (8, 8a) branches off from the delivery line (5, 5a) upstream of the metering valve (7, 7a) and a pressure-regulating valve (9, 9a) is provided in the return line (8, 8a),
**characterised in that**
the pressure-regulating valve is a differential pressure regulator (9, 9a) which is additionally connected to the delivery line (5, 5a) via a control line (10, 10a) upstream of the metering valve (7, 7a) in order to adjust the pressure differential between delivery line (5, 5a) and fuel cell system (6, 6a) to a predeterminable value (Δp).

2. Device as claimed in claim 1,
**characterised in that**
a second delivery line (14, 14a) with a second metering valve (15, 15a) branches off from the return line (8, 8a), via which the liquid reagent is delivered to a second component (16, 16a) of the fuel cell system, and a second differential pressure regulator (17, 17a) is provided downstream of the point at which the second delivery line (14, 14a) branches off, to adjust the pressure differential between the second delivery line (14, 14a) and the second component (16, 16a) of the fuel cell system to a predetermined value (Δp).

3. Device as claimed in claim 2,
**characterised in that**
methanol is delivered via the first metering valve (7a) to a gas-generating system/evaporator (6a) and via the second metering valve (15a) to a device which generates heat by combusting the methanol (16a).

4. Device as claimed in claim 2,
**characterised in that**
water is delivered via the first metering valve (7) to a gas-generating system/evaporator (6) and via the second metering valve (15) to a device for humidifying the mass flow of oxidant (16).

5. Device as claimed in claim 1,
**characterised in that**
a metering system (1) for the first reagent and a second metering system (2) for a second reagent is provided, the delivery pumps (4, 4a) for the first and second metering systems (1, 2) being driven by a common pump motor (19).

6. Device as claimed in claim 1,
**characterised in that**
the metering valve (7, 7a, 15, 15a) is provided in the form of a magnetic valve with variable opening and closing times.

7. Device as claimed in claim 6,
**characterised in that**
a control device (13) is provided for adjusting the opening and closing times of the magnetic valves (7, 7a, 15, 15a).

8. Method of delivering and metering liquid reagents from a supply container (3, 3a) to a fuel cell system (6, 6a), in which a predetermined mass flow is delivered from the supply container (3, 3a) by means of a delivery pump (4, 4a), the quantity of liquid delivered to the fuel cell system (6, 6a, 16, 16a) via the metering valve (7, 7a, 15, 15a) being set to a predeterminable value, and in which a constant differential pressure (Δp1, Δp2) is set between delivery line (5, 5a, 14, 14a) and fuel cell system (6, 6a, 16, 16a) by means of a differential pressure regulator (9, 9a, 17, 17a).

9. Method as claimed in claim 8,
**characterised in that**
a clocked magnetic valve is used as a metering valve (7, 7a, 15, 15a), the quantity of liquid to be delivered being adjusted by adjusting the opening and closing times of the magnetic valve (7, 7a, 15, 15a).

## Revendications

1. Dispositif pour l'amenée dosée de réactants liquides hors d'un récipient de réserve (3, 3a) au moyen d'une pompe de convoyage (4, 4a) via une conduite de convoyage (5, 5a) jusqu'à un système de piles à combustible (6, 6a), une valve de dosage (7, 7a) étant agencée dans la conduite de convoyage (5, 5a) entre la pompe de convoyage (4, 4a) et le système de piles à combustible (6, 6a), une conduite de retour (8, 8a) se ramifiant depuis la conduite de convoyage (5, 5a) en amont de la valve de dosage (7, 7a), et une valve de régulation de pression (9, 9a) étant agencée dans la conduite de retour (8, 8a), **caractérisé en ce que** la valve de régulation de pression est réalisée sous forme de régulateur de pression différentielle (9, 9a) qui est relié à la conduite de convoyage (5, 5a) en supplément via une conduite de commande (10, 10a) en amont de la valve de dosage (7, 7a) pour régler la différence de pression entre la conduite de convoyage (5, 5a) et le système de piles à combustible (6, 6a) à une valeur prédéterminée (Δp).

2. Dispositif selon la revendication 1, **caractérisé en ce qu'**une deuxième conduite de convoyage (14, 14a) se ramifie depuis la conduite de retour (8, 8a) et comprend une deuxième valve de dosage (15, 15a) via laquelle le réactant liquide est amené à un deuxième composant (16, 16a) du système de piles à combustible, et **en ce qu'**en aval de la ramification de la deuxième conduite de convoyage (14, 14a) est prévu un deuxième régulateur de pression différentielle (17, 17a) qui règle la différence de pression entre la deuxième conduite de convoyage (14, 14a) et le deuxième composant (16, 16a) du système de piles à combustible à une valeur prédéterminée (Δp).

3. Dispositif selon la revendication 2, **caractérisé en ce que** l'amenée de méthanol s'effectue via la première valve de dosage (7a) jusqu'à un système de génération de gaz/évaporateur (6a) et via la deuxième valve de dosage (15a) jusqu'à un dispositif pour générer de l'énergie thermique par combustion du méthanol (16a).

4. Dispositif selon la revendication 2, **caractérisé en ce que** l'amenée d'eau s'effectue via la première valve de dosage (7) jusqu'à un système de génération de gaz/évaporateur (6) et via la deuxième valve de dosage (15) jusqu'à un dispositif pour humidifier le courant massique d'oxydant (16).

5. Dispositif selon la revendication 1, **caractérisé en ce qu'**il est prévu un système de dosage (1) pour le premier réactant et un deuxième système de dosage (2) pour un deuxième réactant, l'entraînement des pompes de convoyage (4, 4a) pour le premier et pour *le* deuxième système de dosage (1, 2) s'effectuant via un moteur de pompe commun (19).

6. Dispositif selon la revendication 1, **caractérisé en ce que** la valve de dosage (7, 7a, 15, 15a) est réalisée sous forme de valve magnétique avec des durées d'ouverture et de fermeture variables.

7. Dispositif selon la revendication 6, **caractérisé en ce qu'**il est prévu un appareil de commande (13) pour régler les durées d'ouverture et de fermeture des valves magnétiques (7, 7a, 15, 15a).

8. Procédé pour l'amenée dosée de réactants liquides hors d'un récipient de réserve (3, 3a) jusqu'à un système de piles à combustible (6, 6a), un courant massique prédéterminé étant convoyé hors du récipient de réserve (3, 3a) à l'aide d'une pompe de convoyage (4, 4a), la quantité de liquide amenée au système de piles à combustible (6, 6a, 16, 16a) étant réglée à une valeur prédéterminée à l'aide d'une valve de dosage (7, 7a, 15, 15a), et une pression différentielle constante (Δp1, Δp2) entre la conduite de convoyage (5, 5a, 14, 14a) et le système de piles à combustible (6, 6a, 16, 16a) étant réglée à l'aide d'un régulateur de pression différentielle (9, 9a, 17, 17a).

9. Procédé selon la revendication 8, **caractérisé en ce que** l'on utilise à titre de valve de dosage (7, 7a, 15, 15a) une valve magnétique cadencée, la quantité de liquide à amener étant réglée par réglage des durées d'ouverture/fermeture de la valve magnétique (7, 7a, 15, 15a).
